# EUROPÄISCHE PATENTANMELDUNG

(11) **EP 0 716 046 A1**
(43) Veröffentlichungstag der Anmeldung: **12.06.1996**
(21) Anmeldenummer: 95118757.4
(22) Anmeldetag: 29.11.1995
(51) Int. Cl.: C02F 1/72

(54) **Verfahren zur Oxidation von organischen Halogenverbindungen in Abwässern**

(30) Priorität: 07.12.1994 DE 4443528
(71) Anmelder: BASF AKTIENGESELLSCHAFT, D-67056 Ludwigshafen (DE)
(72) Erfinder: Baur, Karl Gerhard, Dr., D-67063 Ludwigshafen (DE); Papkalla, Thomas, Dr., D-68165 Mannheim (DE)

(57) **Zusammenfassung**

Verfahren zur Oxidation von organische Halogenverbindungen enthaltenden Abwässern, indem man die Abwässer bei Temperaturen von 100 bis 350°C und Drücken von 5 bis 190 bar mit Salpetersäure umsetzt.

## Beschreibung

Die vorliegende Erfindung betrifft ein Verfahren zur Oxidation von organischen Halogenverbindungen enthaltenden Abwässern bei erhöhten Temperaturen und Drücken mit Salpetersäure.

Die Entfernung von organisch gebundenen Halogen aus Abwässern stellt ein Problem dar, besonders wenn die organischen Halogenverbindungen gut wasserlöslich sind. Sehr häufig werden diese Verbindungen durch Adsorption an Aktivkohle aus dem Wasser entfernt, bevor das Abwasser einer biologischen Behandlung unterworfen wird. Eine Entsorgung der dabei anfallenden Aktivkohle gestaltet sich dabei ebenfalls problematisch, da deren Verbrennung so durchgeführt werden muß, daß sich keine Dioxinverbindungen bilden können, bzw. die Aktivkohle muß sicher deponiert werden. Diese Entsorgungsarten für die Aktivkohle sind sehr teuer.

Der vorliegenden Erfindung lag daher die Aufgabe zugrunde, den zuvor genannten Nachteilen abzuhelfen.

Demgemäß wurde ein neues und verbessertes Verfahren zur Oxidation von organische Halogenverbindungen enthaltenden Abwässern gefunden, welches dadurch gekennzeichnet ist, daß man die Abwässer bei Temperaturen von 100 bis 350°C und Drücken von 5 bis 190 bar mit Salpetersäure umsetzt.

Das vorliegende Verfahren kann wie folgt durchgeführt werden:
Dem zu behandelnden Abwasser kann in Druckbehältern bei einer Temperatur von 100 bis 350°C, bevorzugt 180 bis 320°C, besonders bevorzugt 250 bis 300°C und einem Druck von 5 bis 190 bar, bevorzugt 30 bis 150 bar, besonders bevorzugt 70 bis 130 bar, die für den Abbau von organischen Halogenverbindungen, insbesondere von adsorbierbaren organischen Halogenverbindungen (AOX) notwendige Salpetersäuremenge von 1 bis 30 Gew.-%, bevorzugt 1 bis 20 Gew.-%, besonders bevorzugt 1 bis 10 Gew.-% zugesetzt werden.

Als Salpetersäure kann konzentrierte, bevorzugt 10 bis 70 Gew.-%ige wäßrige Salpetersäure, besonders bevorzugt 30 bis 70 Gew.-%ige technische wäßrige Salpetersäure eingesetzt werden.

Die Salpetersäure kann auch durch die Synthese bedingt schon im Abwasser in ausreichenden Mengen vorhanden sein und braucht somit nicht zudosiert zu werden. Auch verunreinigte Abfallsäure kann eingesetzt werden.

Als Druckbehälter eignen sich beispielsweise Rohrreaktoren oder in Kaskade geschaltete Autoklaven.

In einer bevorzugten Ausgestaltung wird das Abwasser mit einer Pumpe durch einen Wärmetauscher gefördert, in dem es auf 220°C vorgewärmt wird. Anschließend wird das vorgewärmte Abwasser durch Direkteinspeisung von 100 bar Dampf oder durch eine indirekte Beheizung auf 250°C erhitzt. Nach Einstellung der für den AOX-Abbau notwendigen Salpetersäurekonzentration in dem 250°C heißen Abwasser wird dieses durch einen Reaktor ohne Rückvermischung (z.B. Rohrreaktor mit Einbauten, der mit Tantal oder Zirkon ausgekleidet ist) gefördert. Nach einer Verweilzeit von 5 bis 30 min wird die Reaktionslösung im Gegenstrom mit dem Feed abgekühlt und entspannt.

Zur kontinuierlichen Ausgestaltung des Verfahrens kann man vorzugsweise Rohrreaktoren einsetzen, in welchen die Strömung der Flüssigkeit so eingestellt ist, daß Rückvermischung unterbleibt.

### Beispiele

### Beispiel 1

Ein Abwasser, das neben anderen Verunreinigungen p-Nitrochlorsulfonsäure und Dinitrochlorsäure enthielt und einen Salptersäuregehalt von 16 g/l aufwies, wurde unter den folgenden Bedingungen oxidativ in einer kontinuierlichen Anlage behandelt:
Reaktionstemperatur = 250°C, Druck = 75 bar, VWZ = 15 min

| Analysenergebnisse der oxidativen Behandlung | | | | | |
|---|---|---|---|---|---|
| Probe | TOC | AOX | CSB | NOS | DNCS |
| | [ppm] | [ppm] | [ppm] | [ppm] | [ppm] |
| Zulauf | 1690 | 640 | 1720 | 140 | 2400 |
| Austrag | 86 | 0,5 | 260 | < 1 | 12 |
| Abbau [%] | 94,9 | >99 | 84,8 | >99 | 99,5 |
| AOX = adsorbierbare organische Halogenverbindungen, CSB = chemischer Sauerstoffbedarf, NCS = p-Nitrochlorsulfonsäure, DNCS = 2,4-Dinitrochlorsäure | | | | | |

### Beispiel 2

Ein Abwasser, das neben anderen Verunreinigungen 1-Amino-2-chlor-4-hydroxy-anthrachinon enthielt, wurde in einer kontinuierlichen Anlage mit 5 Gew.-% HNO₃ bei 250 bzw. 265°C, 15 min VWZ und 75 bar oxidativ behandelt

| Analysenergebnisse der oxidativen Behandlung | | | |
|---|---|---|---|
| Versuch | TOC [ppm] | CSB [ppm] | AOX [ppm] |
| 1 | | | |
| Zulauf | 7400 | 19600 | 640 |
| Austrag | 1560 | 3840 | 110 |
| Abbau [%] | 78,9 | 80,4 | 82,8 |

| 2 | | | |
|---|---|---|---|
| Zulauf | 7800 | 18400 | 720 |
| Austrag | 1170 | 2270 | 130 |
| Abbau [%] | 85 | 87,7 | 81,9 |
| Versuchsbedingungen 1: T = 250°C, p = 75 bar, VWZ = 15 min, 5 Gew.-% HNO₃ Versuchsbedingungen 2: T = 265°C, p = 75 bar, VWZ = 15 min, 5 Gew.-% HNO₃ | | | |

### Beispiel 3

Ein Abwasser aus einer Farbpigmentproduktion welches neben anderen Verunreinigungen Tetrachlorphthalsäure und Tetrachlorphthalsäuremonoamid als Natriumsalze gelöst enthielt, wurde in einer kontinuierlichen Anlage bei 260°C und 80 bar mit 5 Gew.-% HNO₃ behandelt.

| Analysenergebnisse der oxidativen Behandlung | | | | |
|---|---|---|---|---|
| Probe | TOC | TCPS | TCAM | AOX |
| | [ppm] | [ppm] | [ppm] | [ppm] |
| Zulauf | 2860 | 1070 | 5770 | 3200 |
| Austrag | 270 | < 5 | < 5 | 120 |
| Abbau [%] | 90,6 | > 99 | > 99 | 96,3 |
| TCPS = Tetrachlorphthalsäure TCAM = Tetrachlorphthalsäuremonoamid | | | | |

### Beispiel 4

Ein Abwasser, welches mit den leichtflüchtigen Chlorkohlenwasserstoffen Chloroform, Tetrachlorkohlenstoff, Dichlorethan, Trichlorethan und Trichlorethan beladen war, wurde mit 5 Gew.-% Salpetersäure versetzt und unter den Bedingungen 265°C, 80 bar, 15 Minuten Verweilzeit durch eine Rohrschlange gefahren, wobei durch geeignete Strömungsgeschwindigkeit eine Rückvermischung vermieden wurde.

| | AOX | TOC | Cl |
|---|---|---|---|
| Zulauf mg/l | 2465 | 615 | |
| Austrag mg/l | 12 | 6 | 2400 |
| Abbau % | 99,9 | 98,9 | - |

Das Beispiel zeigt, daß die leichtflüchtigen aliphatischen Chlorkohlenwasserstoffe praktisch quantitativ eliminiert werden und Chlor im Rahmen der Meßgenauigkeit nach der Behandlung als Chlorid wiedergefunden wird.

## Patentansprüche

1. Verfahren zur Oxidation von organische Halogenverbindungen enthaltenden Abwässern, dadurch gekennzeichnet, daß man die Abwässer bei Temperaturen von 100 bis 350°C und Drücken von 5 bis 190 bar mit Salpetersäure umsetzt.

2. Verfahren zur Oxidation von organische Halogenverbindungen enthaltenden Abwässern nach Anspruch 1, dadurch gekennzeichnet, daß die organischen Halogenverbindungen in den Abwässern gelöst sind.

3. Verfahren zur Oxidation von organische Halogenverbindungen enthaltenden Abwässern nach Anspruch 1, dadurch gekennzeichnet, daß man die Umsetzung bei Temperaturen von 180 bis 320°C durchführt.

4. Verfahren zur Oxidation von organische Halogenverbindungen enthaltenden Abwässern nach Anspruch 1, dadurch gekennzeichnet, daß man die Umsetzung bei Drücken von 30 bis 150 bar durchführt.

5. Verfahren zur Oxidation von organische Halogenverbindungen enthaltenden Abwässern nach Anspruch 1, dadurch gekennzeichnet, daß man die Umsetzung bei Temperaturen von 250 bis 300°C durchführt.

6. Verfahren zur Oxidation von organische Halogenverbindungen enthaltenden Abwässern nach Anspruch 1, dadurch gekennzeichnet, daß man die Umsetzung bei Drücken von 70 bis 130 bar durchführt.

7. Verfahren zur Oxidation von organische Halogenverbindungen enthaltenden Abwässern nach Anspruch 1, dadurch gekennzeichnet, daß die Konzentration an Salpetersäure im Abwasser 1 bis 30 Gew.-% beträgt.

8. Verfahren zur Oxidation von organische Halogenverbindungen enthaltenden Abwässern nach Anspruch 1, dadurch gekennzeichnet, daß man die Oxidation bei einem pH-Wert ≦ 6 durchführt.

9. Verfahren zur Oxidation von organische Halogenverbindungen enthaltenden Abwässern nach Anspruch 1, dadurch gekennzeichnet, daß man die Umsetzung kontinuierlich durchführt.

10. Verfahren zur Oxidation von organische Halogenverbindungen enthaltenden Abwässern nach Anspruch 1, dadurch gekennzeichnet, daß man die Umsetzung in einem Rohrreaktor durchführt.
